# EUROPEAN PATENT APPLICATION

(11) **EP 4 768 890 A1**
(43) Date of publication of application: **01.07.2026**
(21) Application number: 25220183.5
(22) Date of filing: 02.12.2025
(51) Int. Cl.: G01N 3/18, G01N 3/08

(54) **THERMOMECHANICAL ANALYSIS APPARATUS**

(30) Priority: 27.12.2024 JP 2024231994
(71) Applicant: Hitachi High-Tech Analysis Corporation, Tokyo 105-6411 (JP)
(72) Inventor: KOBAYASHI, Kengo, Tokyo, 105-6411 (JP); OKANO, Yui, Tokyo, 105-6411 (JP)
(74) Representative: Stöckeler, Ferdinand

(57) **Abstract**

A thermomechanical analysis apparatus with improved measurement accuracy when a sample stage is used is provided. The thermomechanical analysis apparatus (1) includes a sample stage (15) where a sample (S) is placed, a sample tube (11) where the sample stage is placed, the sample tube (11) being fixed to a measurement system, a probe (10) extending in an axial direction (L), one end of the probe coming in direct or indirect contact with the sample (S) to apply a load to the sample, and a furnace (12a, 12b) configured to heat the sample, wherein the sample stage and the sample tube respectively include engaging portions (11s, 15E) that engage with each other to position the sample stage.

## Description

### BACKGROUND

### Technical Field

The present disclosure relates to a thermomechanical analysis apparatus that performs measurement of thermal behavior of a sample.

### Description of the Related Art

In the related art, as a method of evaluating the temperature characteristics of a sample, a method called thermal analysis that measures the thermal behavior (physical change) of the sample corresponding to temperature changes by heating a sample is used. Thermal analysis is defined in "General Rules for Thermal Analysis" in JIS K 0129:2005 and techniques of measuring physical properties of a measurement target (measurement sample) when the temperature of the sample is controlled by a program all can be regarded as thermal analysis. As general thermal analysis, there are five kinds of methods, (1) differential thermal analysis (TDA) that detects temperature (temperature difference), (2) differential scanning calorimetry (DSC) that measures heat flow difference, (3) thermogravimetry (TG) that detects mass (weight variation), (4) thermomechanical analysis (TMA) that detects mechanical properties, and (5) dynamic mechanical analysis (DMA).

Among these, thermomechanical analysis (TMA) applies a load to a sample through a probe and detects shape variation of the sample at that time as displacement of the probe (e.g., see Patent Documents 1 and 2). Accordingly, it is possible to measure the elastic modulus or expansion rate of the sample as a function of temperature or time.

Here, the thermomechanical analysis apparatus (TMA) is provided with a sample tube (reference tube) fixed to a measurement system, and a sample is placed directly on the sample tube or placed indirectly with a sample stage therebetween. Further, by bringing the probe into contact with the sample, a load is applied to the sample to perform various measurements.

This sample tube (reference tube) is usually formed in a cylindrical shape, and by pressing a sample with a probe while holding the sample inside or on top of it, an expansion/compression or penetration measurement mode can be performed.

Further, as described in Patent Document 2, an opening 11k shown in FIG. 3 may be provided on the side of a sample tube 11, or a slit 11s may be formed on the bottom surface of the sample tube 11. Further, a chuck 4b is engaged in the slit 11s, and a film-shaped sample S2 may be clamped by chucks 4a and 4b to perform tensile measurement.

### (Prior Art Document)

### (Patent Document)

(Patent Document 1) Japanese Patent Publication No. 2909922
(Patent Document 2) Japanese Patent Publication No. 3370620

### SUMMARY

However, as described in Patent Document 1, there is a case where a sample stage is placed in a sample tube, and a sample is placed on the sample stage. When a sample is installed in the sample tube with the sample stage therebetween, the sample tube and the sample do not come into direct contact, so it is possible to suppress contamination of the sample tube.

However, a sample stage may be moved when a sample is installed, or the sample stage may be moved due to slight vibrations when sample tube is moved up and down after a sample is installed, or when a furnace surrounding the sample tube is closed, so there is a concern that measurement accuracy may decrease.

The present disclosure has been made in an effort to solve the problems described above and an objective of the present disclosure is to provide a thermomechanical analysis apparatus with improved measurement accuracy when a sample stage is used.

In order to achieve the objectives, a thermomechanical analysis apparatus of the present disclosure includes: a sample stage where a sample is placed; a sample tube where the sample stage is placed, the sample tube being fixed to a measurement system; a probe extending in an axial direction, one end of the probe coming in direct or indirect contact with the sample to apply a load to the sample; and a furnace configured to heat the sample, wherein the sample stage and the sample tube respectively include engaging portions that engage with each other to position the sample stage.

According to the thermomechanical analysis apparatus, since the sample stage can be positioned at a predetermined position in the sample tube by the engaging portions and can be firmly engaged to the sample tube, movement of the sample stage during measurement is suppressed, whereby measurement accuracy when the sample stage is used is improved.

In the thermomechanical analysis apparatus of the present disclosure, a slit for engaging a chuck for tensile measurement is formed on a bottom surface of the sample tube, the slit is one of the engaging portions, the sample stage is placed on the bottom surface of the sample tube, and a projection that is to be fitted into the slit is formed on a bottom surface of the sample stage as the other one of the engaging portions.

According to the thermomechanical analysis apparatus, the present disclosure can be effectively applied to a sample tube that can also be used for tensile measurement.

According to the present disclosure, a thermomechanical analysis apparatus with improved measurement accuracy when a sample stage is used can be obtained.

### BRIEF DESCRIPTION OF THE DRAWINGS

FIG. 1 is a view illustrating the configuration of a thermomechanical analysis apparatus according to an embodiment of the present disclosure;
FIG. 2 is a perspective view illustrating a sample tube;
FIG. 3 is a perspective view illustrating an example in which the sample tube is used for tensile measurement;
FIG. 4 is a perspective view illustrating a sample stage;
FIG. 5 is a perspective view illustrating a modified example of the sample stage;
FIGS. 6A and 6B are top views illustrating a state in which the sample stage of FIG. 5 is placed in the sample tube; and
FIG. 7 is a perspective view illustrating another modified example of the thermomechanical analysis apparatus and the sample stage.

### DETAILED DESCRIPTION

Hereinafter, embodiments of the present disclosure are described with reference to drawings.

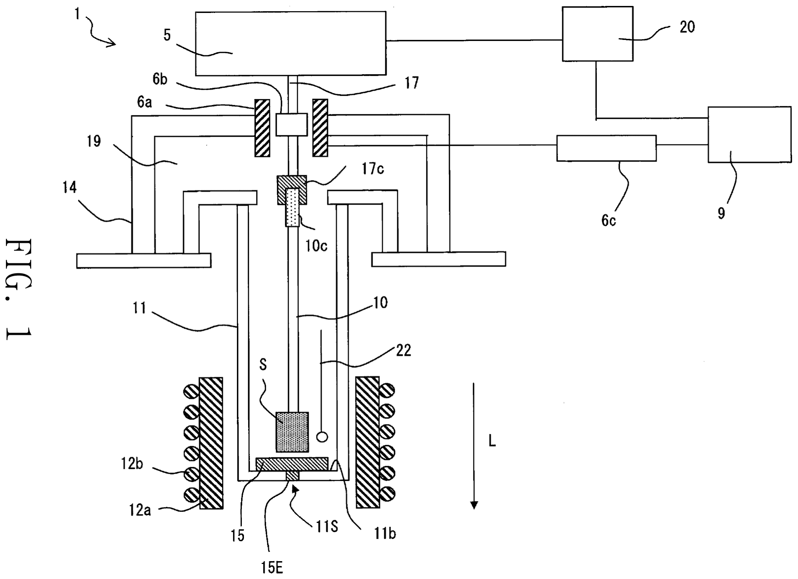

FIG. 1 is a view illustrating the configuration of a thermomechanical analysis apparatus according to an embodiment of the present disclosure.

A thermomechanical analysis apparatus 1 includes a sample stage 15 where a sample S is placed, a sample tube 11 where the sample stage 15 is placed and that is fixed to a measurement system (frame 14), a rod-shaped probe 10 that extends in the axial direction L (vertical direction in FIG. 1), a load generator 5 that generates a load in the axial direction L of the probe 10, a load transfer shaft 17 that connects the load generator 5 and the probe 10, a displacement detector 6a, 6b that detects displacement in the axial direction L of the probe 10, and a furnace 12a, 12b for heating the sample S.

Each component of the thermomechanical analysis apparatus 1 is supported by the frame 14. Further, the cylindrical sample tube 11 (also referred to as a reference tube or sample holding member) with a bottom is moved downward from the frame 14 toward the sample S, and a columnar sample stage 15 is placed on the bottom surface 11b of the sample tube 11.

Further, in this embodiment, a first end (lower end) of the probe 10 is brought into direct contact with the upper end of the sample S placed on the sample stage 15 to apply a load to the sample S.

A thermocouple 22 for temperature measurement is additionally disposed in the vicinity of the sample S.

The load transfer shaft 17 has a rod shape extending in the axial direction L, and its upper end (first end) is fixed (connected) to the load generator 5, and a connection joint 17c is installed at its lower end (second end).

Though not shown, the load generator 5 includes a magnetic circuit composed of a coil and a permanent magnet surrounding the coil, and generates a load by being displaced in the axial direction L when current flows through the coil.

Meanwhile, a probe joint 10c is connected to a second end (upper end) of the probe 10 and the connection joint 17c is connected to the probe joint 10c to transmit a load from the load generator 5 to the probe 10.

Further, the probe 10 and the load transfer shaft 17 are coaxially connected.

Further, a core (magnetic material) 6b made of a conductive material is fixed on the outer surface of a portion of the load transfer shaft 17 between the connection joint 17c and the load generator 5 in the axial direction L, and a differential transformer (primary coil and secondary coil) 6a is disposed around the core 6b. Further, a detector 6c detects the voltage of the differential transformer 6a.

Further, when the position of the core 6b (furthermore, the probe 10) is changed with respect to the differential transformer 6a due to variation of the length of the sample S by thermal expansion when temperature is changed, a voltage is generated in the differential transformer 6a in response to the displacement, so the displacement of the core 6b (furthermore, the probe 10) in the axial direction L can be detected.

The differential transformer 6a and the core 6b constitute a "displacement detector".

A furnace composed of a furnace body 12a and a heater 12b disposed around the furnace body 12a is installed around the sample S and the temperature of the furnace is controlled by a predetermined controller.

A load signal generator 20 generates a load signal for operating the load generator 5. The load signal generator 20 is, for example, an electronic circuit equipped with various electronic parts or chips on a circuit board.

An analog signal is output to the load generator 5 from the load signal generator 20, whereby a predetermined load is generated.

The load generated by the load generator 5 is applied to the sample S through the load transfer shaft 17 and the probe 10.

Meanwhile, displacement of the sample S, etc. due to the load is transmitted to the core 6b through the probe 10 and the load transfer shaft 17 and is detected as a change of the position of the core 6b relative to the differential transformer 6a.

A displacement detection signal by the differential transformer 6a and the core 6b is sent to the detector 6c and is converted into a displacement signal.

The displacement signal that is the output from the detector 6c is sent to a calculator 9 and is combined with the load signal previously input to the load signal generator 20, whereby the physical quantity (mechanical properties) of the sample S is calculated.

Specifically, in this example, as thermomechanical analysis (TMA), a load is applied to the sample S by the probe 10 and the shape change (length change, etc.) of the sample S at that time is obtained as a physical quantity.

Further, the present disclosure targets various measurements in expansion/compression and penetration measurement modes (for example, linear thermal expansion coefficient, glass transition temperature, etc.) and does not target tensile measurement.

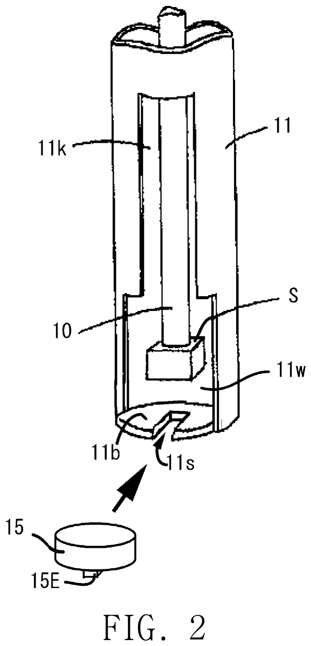

Here, as shown in FIG. 2, the sample tube 11 has a roughly cylindrical shape extending in the axial direction L and has an opening 11k on the front side of the lateral surface of the sample tube 11, and a slit 11s that is open in a rectangular shape is formed on the bottom surface 11b of the sample tube 11.

Further, the lateral surface 11w of the sample tube 11, excluding the opening 11k, surrounds the bottom surface 11b in an arc shape. Further, a notch of the slit 11s is open on the side of the bottom surface 11b facing the opening 11k.

Further, the sample stage 15 is placed on the bottom surface 11b to cover the slit 11s.

Further, installation or replacement of the sample S is performed by opening the furnace, lowering the sample tube 11, and inserting or removing the sample S through the opening 11k. Thereafter, the sample tube 11 is moved to an appropriate position, depending on the length of the sample S in the axial direction L, the furnace is closed, and then measurement is performed.

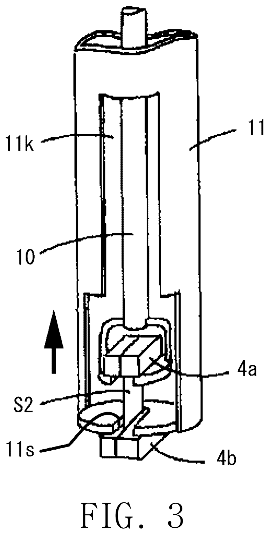

Meanwhile, as shown in FIG. 3, in this embodiment, the sample tube 11 can also be used for tensile measurement. However, as already mentioned, the present disclosure does not target tensile measurement.

Next, features of the present disclosure are described.

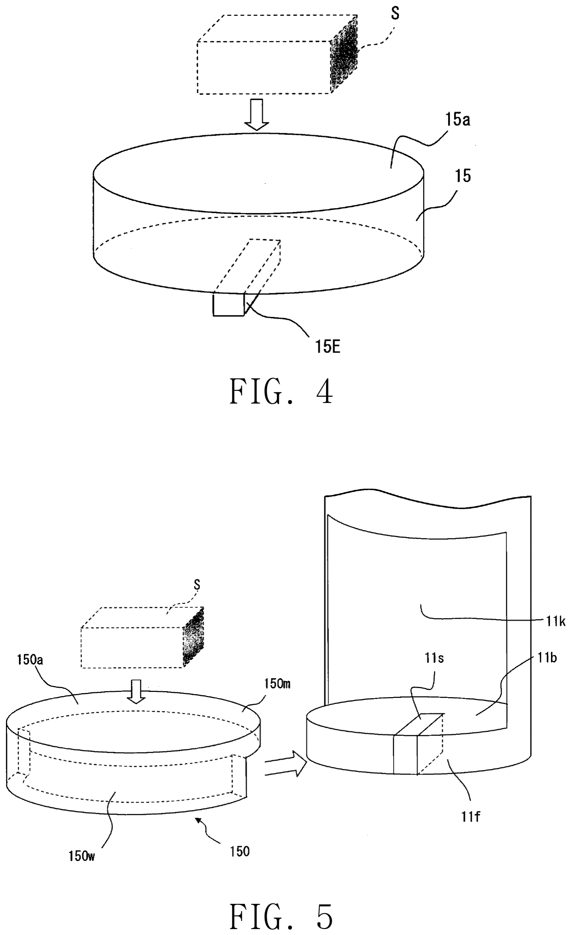

As shown in FIGS. 2 and 4, in the thermomechanical analysis apparatus 1 of the present disclosure, a projection 15E protruding downward in a rectangular shape is formed on the opposite surface (bottom surface) of the contact surface (top surface) 15a with the sample S on the sample stage 15. The outer shape of the projection 15E is slightly smaller than the size of the slit 11s on the bottom surface 11b of the sample tube 11.

Accordingly, as shown in FIG. 2, by placing the sample stage 15 over the bottom surface 11b of the sample tube 11 and inserting the projection 15E of the sample stage 15 from the notch portion of the slit 11s, the projection 15E is fitted in the slit 11s and they are engaged with each other.

Accordingly, the sample stage 15 can be positioned at a predetermined position in the sample tube 11 and firmly engaged to the sample tube 11, whereby the measurement accuracy when the sample stage 15 is used is improved.

Meanwhile, the projection 15E and the slit 11s respectively correspond to the "engaging portions" in the claims.

Further, when the same material is used for the sample stage 15, the sample tube 11, and the probe 10, measurement errors are minimized, so this is preferable. The material of the sample stage 15, the sample tube 11, and the probe 10 may include, for example, quartz glass or alumina.

Meanwhile, in the above embodiment, the projection 15E and the slit 11s were described as examples of the "engaging portions," but the slit 11s may also have a recessed shape that engages with the projection 15E.

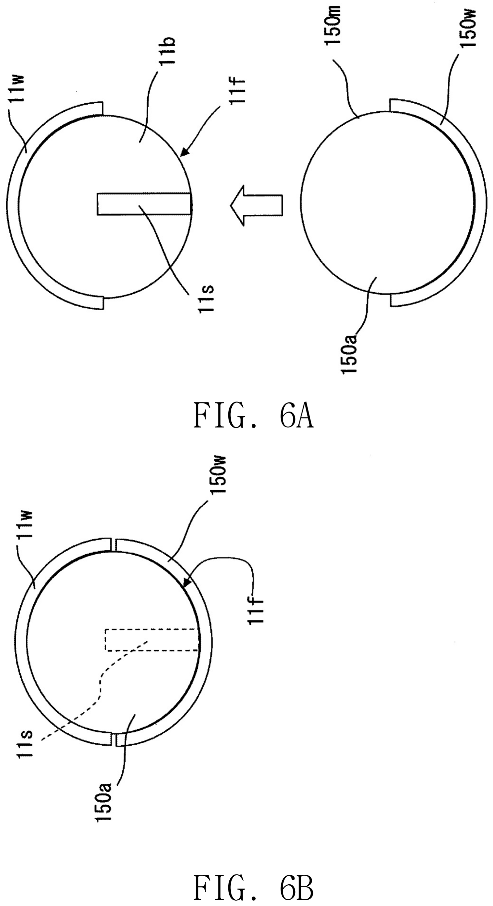

FIGS. 5 and 6 illustrate a modified example of the sample stage 150.

As shown in FIGS. 5 and 6, the sample stage 150 integrally includes a disc-shaped base portion 150m having a contact surface (top surface) 150a with the sample S, and a side wall portion 150w extending downward from a part of the outer peripheral edge of the base 150m (in FIG. 5, approximately a semicircular portion on the front side of the paper surface).

Further, by placing the sample stage 150 over the bottom surface 11b of the sample tube 11 and inserting the sample stage 150 through the opening 11k of the sample tube 11, the semicircular arc-shaped side wall portion 150w comes into contact from the outside with the semicircular front wall portion 11f of the bottom surface 11b of the sample tube 11.

Accordingly, the sample stage 150 can be positioned at a predetermined position in the sample tube 11 and firmly engaged to the sample tube 11, whereby the measurement accuracy when the sample stage 150 is used is improved.

Meanwhile, the side wall portion 150w and the front wall portion 11f respectively correspond to the "engaging portions" in the claims.

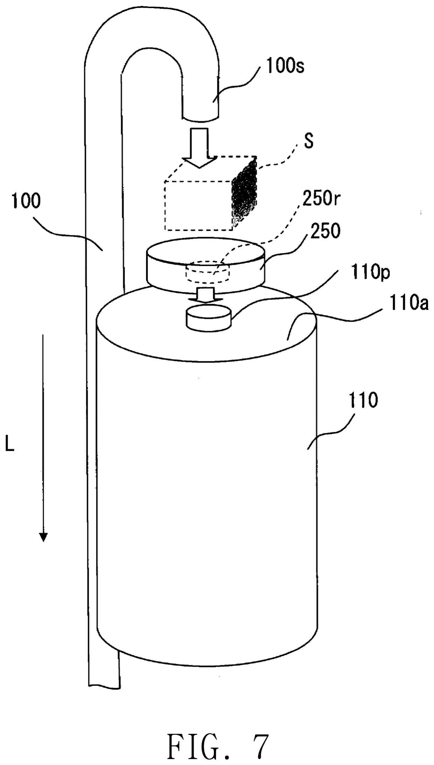

FIG. 7 illustrates another modified example of the thermomechanical analysis apparatus and the sample stage 250.

Here, the thermomechanical analysis apparatus of FIG. 7 is identical to the thermomechanical analysis apparatus 1 of FIG. 1 except for the configurations of the sample tube 110 and the probe 100, and therefore, descriptions of other components are omitted.

As shown in FIG. 7, the sample tube 110 has a cylindrical shape and is configured such that a sample S is placed on the surface of the upper end (upward surface) 110a thereof via a sample stage 250.

Meanwhile, the probe 100 has an overall rod shape extending in the axial direction L (vertical direction in FIG. 1), and a first end (upper end) thereof is bent downward in a U-shape. Further, the load generator is installed below the probe 100, and when the probe 100 is pressed downward by the load generator, the upper end 100s of the U-shaped bent probe 100 applies a downward load to the sample S.

Here, on the upward surface (contact surface with the sample) 110a of the sample tube 110, a columnar protrusion 110p is formed. Meanwhile, the sample stage 250 has a disc shape, and on its lower surface (surface facing a downward surface 110a), a circular recess 250r is formed. The recess 250r has a diameter slightly larger than that of the protrusion 110p.

Further, by placing the sample stage 250 over the upward surface 110a of the sample tube 110, the recess 250r is fitted to the protrusion 110p.

Accordingly, the sample stage 250 can be positioned at a predetermined position in the sample tube 110 and firmly engaged to the sample tube 110, whereby the measurement accuracy when the sample stage 250 is used is improved.

Meanwhile, the recess 250r and the protrusion 110p respectively correspond to the "engaging portions" in the claims.

The present disclosure is not limited to the embodiments described above.

For example, the shape of the sample stage or the sample tube is not limited.

Further, the number, shape, and the like of the engaging portions are also not limited.

### [Description of Reference Numerals]

1: thermomechanical analysis apparatus
10, 100: probe
11, 110: sample tube
11b: bottom surface of sample tube
11s, 15E, 11f, 150w, 110p, 250r: engaging portion
11s: engaging portion (slit)
15E: engaging portion (projection)
12a, 12b: furnace
S: sample
L: axial direction

## Claims

1. A thermomechanical analysis apparatus (1) comprising:
a sample stage (15) where a sample (S) is placed;
a sample tube (11) where the sample stage (15) is placed, the sample tube (11) being fixed to a measurement system;
a probe (10) extending in an axial direction (L), one end of the probe (10) coming in direct or indirect contact with the sample (S) to apply a load to the sample (S); and
a furnace (12a, 12b) configured to heat the sample (S),
**characterized in that** the sample stage (15) and the sample tube (11) respectively comprise engaging portions (11s, 15E) that engage with each other to position the sample stage (15).

2. The thermomechanical analysis apparatus (1) according to claim 1, wherein a slit (11s) for engaging a chuck (4b) for tensile measurement is formed on a bottom surface of the sample tube (11),
the slit (11s) is one of the engaging portions (11s, 15E), and
the sample stage (15) is placed on the bottom surface of the sample tube (11), and a projection (15E) that is to be fitted into the slit (11s) is formed on a bottom surface of the sample stage (15) as the other one of the engaging portions (11s, 15E).
